# EUROPÄISCHE PATENTSCHRIFT

(11) **EP 1 594 717 B1**
(45) Veröffentlichungstag und Bekanntmachung des Hinweises auf die Patenterteilung: **03.12.2008**
(21) Anmeldenummer: 04708725.9
(22) Anmeldetag: 06.02.2004
(51) Int. Cl.: B60N 2/16, B60N 2/42, B60N 2/427, B60N 2/433

(54) **HÖHENEINSTELLBARER FAHRZEUGSITZ MIT CRASHSPERRENEINHEIT**
HEIGHT-ADJUSTABLE VEHICLE SEAT PROVIDED WITH A CRASH BLOCKING UNIT
SIEGE DE VEHICULE REGLABLE EN HAUTEUR COMPORTANT UNE UNITE DE BLOCAGE POUR COLLISIONS

(30) Priorität: 19.02.2003 DE 10306827
(43) Veröffentlichungstag der Anmeldung: 16.11.2005
(73) Patentinhaber: KEIPER GmbH & Co. KG, 67657 Kaiserslautern (DE)
(72) Erfinder: SCHUMANN, Kai, 66509 Rieschweiler-Mühlbach (DE); TEUFEL, Ingo, 67806 Rockenhausen (DE); BRAUN, Dieter, 67697 Otterberg (DE); HAMMANN, Heinrich, 67806 Teschenmoschel (DE)
(74) Vertreter: Patentanwälte Hosenthien-Held und Dr. Held
(86) Internationale Anmeldenummer: PCT/EP2004/001082
(87) Internationale Veröffentlichungsnummer: WO 2004/074035

(56) Entgegenhaltungen:
- DE-A- 10 056 082
- DE-A- 19 738 727
- DE-A- 19 953 630
- DE-C- 4 414 031
- US-B1- 6 247 752

## Beschreibung

Die Erfindung betrifft einen Fahrzeugsitz, insbesondere einen Kraftfahrzeugsitz, mit den Merkmalen des Oberbegriffs des Anspruches 1.

Bei einem aus der DE 199 53 630 A1 bekannten Fahrzeugsitz dieser Art ist zur Entlastung des Höheneinstellerantriebs eine Crashsperreneinheit zwischen dem Sitzrahmen und der hinteren Schwinge vorgesehen, welche durch eine Geometrieänderung des unter Vorspannung aufgehängten Viergelenks aktiviert wird. In der DE 100 56 082 A1 ist ein Fahrzeugsitz beschrieben, bei dem am Gestell ein Hebel beschleunigungssensitiv gelagert ist, welcher im Crashfall trägheitsgesteuert mit einem Zahnsegment der hinteren Schwinge verriegelt. Für bestimmte Anwendungen wäre es aber wünschenswert, wenn das Viergelenk eine möglichst geringe Geometrieänderung erfahren würde.

Der Erfindung liegt daher die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, dass die Crashsperreneinheit ein passives oder schaltbares Element aufweist, mittels welchem die Crashsperreneinheit bereits vor oder zu Beginn des Crashs gesondert aktiviert wird, kann das Verriegeln der Verriegelungsglieder und das damit bewirkte Sperren des Viergelenks frühzeitig vorbereitet werden, so daß letzteres nur eine sehr geringe Geometrieänderung erfährt, also das Verriegeln mit einer sehr kleinen Bewegung des Viergelenks erfolgt. Damit wird beispielsweise ein am Sitzrahmen angebrachter Gurtanbindungspunkt nur geringfügig vorverlagert, was die Wirksamkeit des Sicherheitsgurtes und des Airbags deutlich erhöht. Die am Gurtanbindungspunkt wirkende Crashkraft kann auf möglichst direktem Weg in den Fahrzeugboden abgeleitet werden, ohne über weiche Bereiche des Viergelenks zu führen, die durch Deformation die Vorverlagerung des Gurtanbindungspunktes negativ beeinflussen. Eine vorzugsweise bereits vor Crashbeginn erfolgende Aktivierung macht die erfindungsgemäße Lösung "pre-save"-fähig, was die Sicherheit weiter erhöht. Außerdem ist das System - im Gegensatz zu Lösungen mit abscherenden Stiften oder dergleichen - reversibel. Unter dem Begriff Crashbeginn soll der kurze Zeitraum vom ersten Kontakt des Fahrzeuges mit dem crashenden Gegenstand bis zum Einsetzen der Bewegung des Viergelenks verstanden werden, worunter noch eine Bewegung der Getriebeglieder um wenige Winkelgrade fallen soll.

Die Crashsperreneinheit ist die Kombination aus einem durch das Element realisierten Auslösemechanismus und einem durch die Verriegelungsglieder realisierten Verriegelungsmechanismus. Die Crashsperreneinheit wird aktiviert, indem das Element in einen sperrenden Zustand wechselt, und zwar bereits vor oder zu Beginn des Crashs. Das Sperren wird für eine schnelle Verriegelung (etwa 5-15 ms) ausgenutzt, indem das Element eines der Verriegelungsglieder über eine Kopplung oder dergleichen festhält, und die nachfolgende kinematische Bewegung im Viergelenk zu einer Zwangssteuerung des festgehaltenen Verriegelungsgliedes und damit zu einem Verriegeln der beiden Verriegelungsglieder führt. Die eigentliche Einsteuerbewegung des Verriegelungsgliedes ergibt sich also über die Sperrung eines Freiheitsgrades der Anbindung des Verriegelungsgliedes und das Aufziehen des Viergelenks. Durch die großen Unterschiede der auftretenden Geschwindigkeiten zwischen Normalgebrauch und Crashfall zeigt diese Art der Auslösung bezüglich Aufwand und Schnelligkeit Vorteile gegenüber einem herkömmlichen, kraftgesteuerten Auslösemechanismus.

Die Aktivierung der Crashsperreneinheit vor oder zu Beginn des Crashs kann fremdgesteuert oder in Abhängigkeit der lokalen Randbedingungen erfolgen und direkt zu einem Verriegeln des Viergelenks führen oder zwangsgesteuert mit der beginnenden Bewegung des Viergelenks. Entsprechend ergeben sich verschiedene Varianten.

Für eine Aktivierung spätestens zu Beginn des Crashs, beginnender Bewegung des Viergelenks und zwangsgesteuertem Verriegeln, kann ein passives Element vorgesehen sein, beispielsweise ein geschwindigkeitssensitiver Dämpfer, welcher bei niedrigen Geschwindigkeiten eine Bewegung des genannten Verriegelungsgliedes zusammen mit dem Viergelenk erlaubt, beispielsweise zur Höheneinstellung. Beim Auftreten hoher Relativgeschwindigkeiten zwischen zwei Getriebegliedern baut das Element eine Gegenkraft auf, erhöht also spätestens bei Crashbeginn das Bremsmoment (sperrt). Das Element hält damit das Verriegelungsglied fest, so daß mit der Bewegung des Viergelenks zwangsgesteuert ein Verriegeln erfolgt.

Für eine Aktivierung, die bereits vor einem Crash möglich ist und mit beginnender Bewegung des Viergelenks zu einem zwangsgesteuerten Verriegeln führt, kann ein zwischen zwei Zuständen schaltbares, mangels Geometrieänderung ansonsten passives Element vorgesehen sein, beispielsweise eine schaltbare Kupplung, insbesondere ein Dämpfer mit einer rheologischen Flüssigkeit, welches nach einem Schaltimpuls, beispielsweise von der Airbagsteuerung aufgrund eines Signals eines (Pre-)Crashsensors, von einem ungesperrten in einen gesperrten (oder zumindest sehr stark gedämpften) Zustand übergeht und damit das Verriegelungsglied entsprechend der vorigen Variante festhält, so daß mit der beginnenden Bewegung des Viergelenks zwangsgesteuert ein Verriegeln erfolgt.

Für eine Aktivierung, die bereits vor einem Crash möglich ist und bereits vor einer Bewegung des Viergelenks zu einem direkten Verriegeln führen kann, kann ein zwischen zwei Zuständen schaltbares, aufgrund einer Geometrieänderung aktives Element vorgesehen sein, beispielsweise ein Aktuator. Die Aktivierung erfolgt dann vorzugsweise, indem der Aktuator bereits vor dem Crash, beispielsweise auf ein Signal eines Precrashsensors hin, über die Kopplung ein Verriegelungsglied bewegt und wenigstens für ein Anschnäbeln mit dem anderen Verriegelungsglied am Viergelenk sorgt.

Das schaltbare Element kann entweder in bestromtem oder in unbestromtem Zustand sperren. Im ersten Fall ist vor dem oder im Crashfall das schaltbare Element zu bestromen. Im zweiten Fall, der ein störungsfreies Verriegeln bei einer Unterbrechung der Stromversorgung sicherstellt, ist das schaltbare Element entweder dau= erhaft zu bestromen, so daß der Crashsensor die Stromversorgung kappt, oder - insbesondere im Falle von elektrisch höheneinstellbaren Fahrzeugsitzen - nur zur Höheneinstellung zu bestromen. Zu allen anderen Zeitpunkten, also auch im Crashfall, wird ein Verriegelungsglied entweder dauerhaft festgehalten oder befindet sich bereits im Eingriff mit dem anderen Verriegelungsglied.

Die Aktivierung erfolgt vorzugsweise richtungsunabhängig, d.h. sowohl bei einem Frontcrash als auch bei einem Heckcrash, wofür das Element ebenfalls in zwei verschiedene Richtungen wirksam werden kann.

Die vier Getriebeglieder des Viergelenks sind das fahrzeugstrukturfeste Gestell, zwei am Gestell angelenkte Schwingen und eine die Schwingen gelenkig verbindende Koppel. Durch ein Verriegeln des fahrzeustrukturfesten Gestells und einer der Schwingen als zwei dieser vier Getriebeglieder wird eine bessere Krafteinleitung in die Fahrzeugstruktur ermöglicht und das Viergelenk insgesamt steifer, so daß eine weitere Verringerung der Geometrieänderung desselben erreicht wird.

Die Crashsperreneinheit ist die Kombination aus einem durch das Element realisierten Auslösemechanismus und einem durch die Verriegelungsglieder realisierten Verriegelungsmechanismus. In einer einfach herzustellenden Ausführung weist die Crashsperreneinheit als ein Verriegelungsglied eine in zwei Richtungen wirksame Klinke auf, welche an einem der Getriebeglieder schwenkbar gelagert ist, wobei das andere Verriegelungsglied fest an einem anderen Getriebeglied angebracht ist. Eine vorzugsweise vorgesehene Feder hält im Normalfall die Klinke in einer definierten Lage unter Vorspannung, so daß bei einer Bewegung des Viergelenks zur Einstellung der Sitzhöhe keine Betätigung der Crashsperreneinheit erfolgt. Vorzugsweise wirkt eine einzige Feder in beide möglichen Schwenkrichtungen der Klinke. Die Kopplung zwischen der Klinke und dem getriebegliedfesten Element kann durch ein Hilfsgetriebe, insbesondere durch ein Gestänge aus Stangen und/oder Hebeln, beispielsweise zwei zusätzlichen Getriebegliedern und drei Gelenken oder zwei Gelenken und einem Schiebesitz, wobei ein Gelenk oder der = Schiebesitz durch das Element sperrbar ist, oder durch ein Getriebe, beispielsweise eine Stirnradstufe, realisiert sein und ist auf die Ausgestaltung des Elementes als linear oder rotatorisch wirksames Element abstimmbar, beispielsweise durch Ausbildung als einzelne Haltestange oder als Kurbeltrieb. Durch die Anordnung des Hilfsgetriebes kann das Auslöseverhalten, insbesondere der Auslösezeitpunkt, die Einsteuerbewegung und die Einsteuerkraft, geeignet beeinflusst werden.

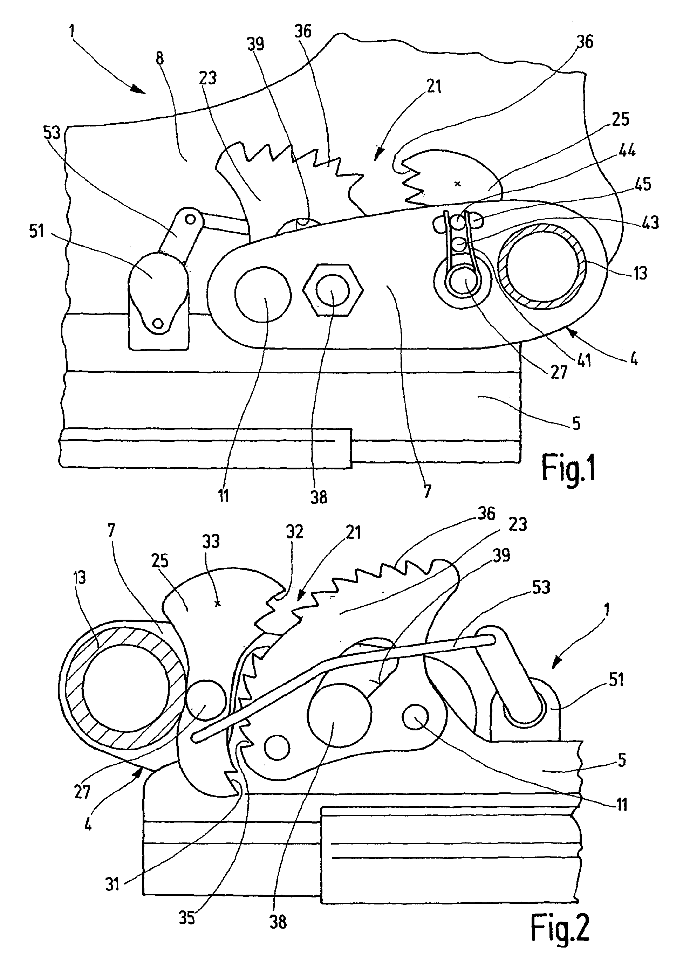

Im folgenden ist die Erfindung anhand von drei in der Zeichnung dargestellten Ausführungsbeispielen näher erläutert. Es zeigen
- Fig. 1: eine teilweise geschnittene Ansicht des Bereichs der hinteren rechten Ecke des ersten Ausführungsbeispiels, welche die nach innen weisende Seite zeigt,
- Fig. 2: eine Fig. 1 entsprechende Ansicht, welche die nach außen weisende Seite ohne Sitzrahmen zeigt,

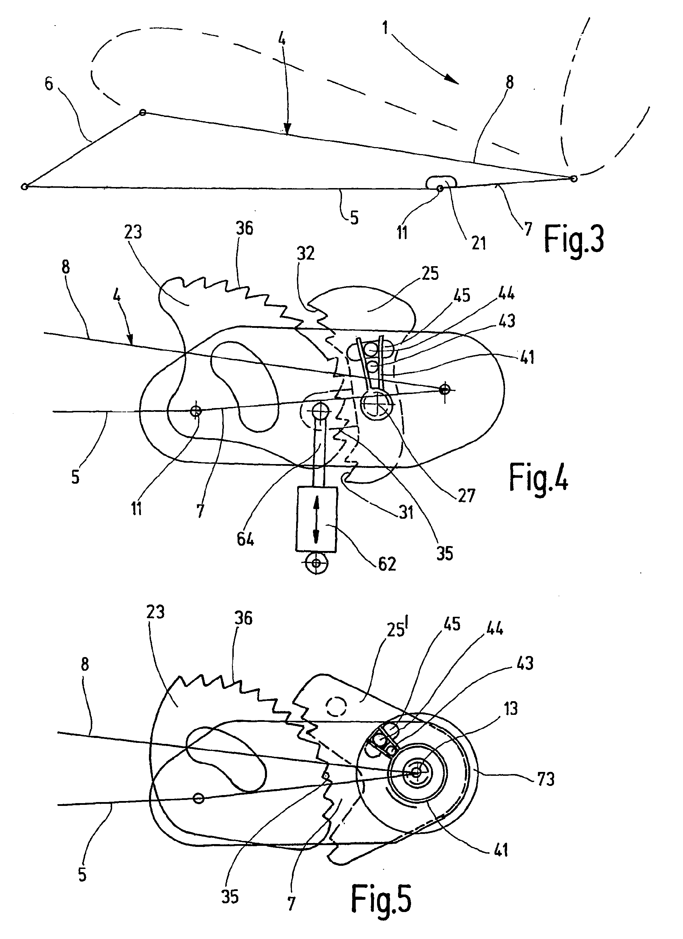

- Fig. 3: eine schematische Prinzipskizze eines Fahrzeugsitzes mit angedeuteter Polsterung,
- Fig. 4: eine schematisierte Darstellung entsprechend Fig. 1 des zweiten Ausführungsbeispiels, und
- Fig. 5: eine schematisierte Darstellung entsprechend Fig. 1 des dritten Ausführungsbeispiels.

Bei allen Ausführungsbeispielen ist ein höheneinstellbarer Fahrzeugsitz 1 eines Kraftfahrzeuges vorgesehen. Als Höheneinsteller dient auf jeder Fahrzeugsitzseite ein Viergelenk 4. Das Viergelenk 4 besteht aus vier Getriebegliedern, nämlich einem fahrzeugstrukturfest zu verbindenden Gestell 5, vorliegend einer Oberschiene eines als Längseinsteller dienenden Sitzschienenpaares, einer am Gestell 5 ange= lenkten vorderen Schwinge 6, einer ebenfalls am Gestell 5 angelenkten hinteren Schwinge 7 und einer an beiden Schwingen 6 und 7 angelenkten Koppel 8, vorliegend einem Sitzrahmenseitenteil. Die Anlenkung der hinteren Schwinge 7 am Gestell 5 erfolgt mittels eines Gelenkbolzens 11, während als Anlenkstelle zwischen der hinteren Schwinge 7 und der Koppel 8 ein rundes Querrohr 13 dient, welches zugleich einen Teil des Sitzrahmens bildet.

Eine Crashsperreneinheit 21 des Viergelenks 4, welche im Crashfall verriegelt, weist ein am Gestell 5 angebrachtes Zahnsegment 23 und eine Klinke 25 auf, welche in den ersten beiden Ausführungsbeispielen mittels eines Lagerbolzens 27 schwenkbar an der hinteren Schwinge 7 gelagert ist. Die zweiarmig ausgebildete, näherungsweise vertikal angeordnete Klinke 25 weist zwei Verzahnungsbereiche auf, und zwar einen unteren Verzahnungsbereich 31 und einen oberen Verzahnungsbereich 32, in dessen Nachbarschaft aufgrund einer materialmäßig vergrößerten Ausbildung der Klinke 25 auch der Schwerpunkt 33 liegt. Die Zähne der beiden Verzahnungsbereiche 31 und 32 sind bezüglich den beiden möglichen Schwenkrichtungen der Klinke 25 leicht radial nach außen gerichtet.

Das um den Gelenkbolzen 11 gekrümmte Zahnsegment 23, welches in geringem Abstand zur Klinke 25 angeordnet ist, ist als Gegenelement zur Klinke 25 vorgesehen. Das Zahnsegment 23 weist ebenfalls zwei Bereiche von Zähnen auf, nämlich einen unteren Zahnsegmentbereich 35, welcher zum Zusammenwirken mit dem unteren Verzahnungsbereich 31 der Klinke 25 ausgebildet ist, d.h. mit leicht nach oben gerichteten Zähnen versehen ist, und einen oberen Zahnsegmentbereich 36, welcher zum Zusammenwirken mit dem oberen Verzahnungsbereich 32 der Klinke 25 ausgebildet ist, d.h. mit leicht nach unten gerichteten Zähnen versehen ist. Bei einer Schwenkbewegung der hinteren Schwinge 7 um den Gelenkbolzen 11 wandern die Verzahnungsbereiche 31 und 32 der Klinke 25 an den Zahnsegmentbereichen 35 und 36 entlang. Um in jeder Einstellung des Viergelenks 4 ein Zusammenwirken gewährleisten zu können, sind die Zahnsegmentbereiche 35 und 36 daher länger als die entsprechenden Verzahnungsbereiche 31 und 32 ausgebildet.

Für eine Verbesserung der Führung ist an der hinteren Schwinge 7 ein Führungsbolzen 38 befestigt, welcher durch eine Kulisse 39 des Zahnsegments 23 ragt, welche um den Gelenkbolzen 11 gekrümmt ist.

Auf der von der Klinke 25 abgewandten Seite der hinteren Schwinge 7 sitzt auf dem Lagerbolzen 27 eine Feder 41, die als Schenkelfeder mit zwei leicht auseinander laufenden Endabschnitten ausgebildet ist. Zwischen ihren Endabschnitten hält die Feder 41 radial weiter innen einen zapfenförmigen ersten Anschlag 43, welcher von der hinteren Schwinge 7 seitlich absteht, und radial weiter außen einen ebenfalls zapfenförmigen zweiten Anschlag 44, welcher oberhalb des Lagerbolzens 27 von der Klinke 25 seitlich absteht und durch einen Durchbruch 45 auf die Seite der Feder 41 ragt. Mit Hilfe der Feder 41 und der Anschläge 43 und 44 wird die Klinke 25 in beide Schwenkrichtungen in einer definierten Lage unter Vorspannung gehalten, und zwar auch bei einer Höheneinstellung des Fahrzeugsitzes 1, d.h. einer Bewegung des Viergelenks 4.

Bei allen drei Ausführungsbeispielen wird im Crashfall im Rahmen einer Aktivierung der Crashsperreneinheit 21 vor oder zu Beginn des Crashs zunächst die in beiden Richtungen wirksame Klinke 25 auf eine Schwenkbewegung relativ zur hinteren Schwinge 7 gesondert vorbereitet ("aktiviert"), wobei dann die Schwenkbewegung bei einer Bewegung des Viergelenks 4 erfolgt, oder die Schwenkbewegung wird unmittelbar durchgeführt (d.h. die Aktivierung erfolgt mit der Bewegung des Viergelenks). Diese Schwenkbewegung führt im ersten Fall zwangsgesteuert und im zweiten Fall direkt zu einem Zahneingriff der Klinke 25 in das Zahnsegment 23, und zwar beim Heckcrash des unteren Verzahnungsbereichs 31 in den unteren Zahnsegmentbereich 35 und beim Frontcrash des oberen Verzahnungsbereichs 32 in den oberen Zahnsegmentbereich 36. Dadurch werden die hintere Schwinge 7 und das Gestell 5 miteinander verriegelt, d.h. das Viergelenk 4 wird gesperrt, und das ganze System wird steifer. Die Crashlasten können so direkt in die Fahrzeugstruktur geleitet werden und bewirken somit nur eine geringe Deformation in der Sitzstruktur. Die verschiedenen Ausführungsbeispiele unterscheiden sich darin, wie und wann die Klinke 25 im Crashfall aktiviert wird und wie und wann das Verriegeln erfolgt.

Im ersten Ausführungsbeispiel ist am Gestell 5 ein rotatorisch wirksames Element 51 angebracht, an welchem ein aus zwei Hebeln bestehender Kurbeltrieb 53 angebracht ist. Zur Kopplung der Klinke 25 mit dem Element 51 ist das andere Ende des Kurbeltriebs 53 an der Klinke 25 in der Nähe des unteren Verzahnungsbereichs 31 angelenkt, also unterhalb des Lagerbolzens 27. Bei dem Element 51 handelt es sich beispielsweise um einen rotatorischen Dämpfer, welcher bei geringen Winkelgeschwindigkeiten, d.h. einer langsamen Bewegung der hinteren Schwinge 7 relativ zum Gestell 5, eine Bewegung des Kurbeltriebs 53 ermöglicht und bei hohen Winkelgeschwindigkeiten in einen Zustand mit großem Bremsmoment wechselt. Es ist aber ebenso möglich, daß das Element 51 eine schaltbare Kupplung (rheologische Flüssigkeit in einem Dämpfer oder dergleichen) oder ein Aktuator (Magnetschalter oder dergleichen) ist, die jeweils von einem Crashsensor in einen Sperrzustand geschaltet werden, und zwar je nach Anwendungsfall auch bereits bei einer scharfen Bremsung, also vor dem eigentlichen Crashfall. Als schaltbare Kupplung hält das sperrende Element 51 über den Kurbeltrieb 53 die Klinke 25 fest, während es im Falle einer Ausbildung als Aktuator eine Stellbewegung durchführt und die Klinke 25 bereits in Eingriff mit dem Zahnsegment 23 bringt oder wenigstens zum Anschnäbeln bringt.

Im Falle eines Dämpfers oder einer schaltbaren Kupplung versucht sich das Viergelenk 4 abzusenken (Heckcrash) oder aufzurichten (Frontcrash), sobald der Crash erfolgt. Die an ihrem Lagerbolzen 27 von der hinteren Schwinge 7 mitgenommene Klinke 25 wird durch das sperrende Element 51 und den Kurbeltrieb 53 festgehalten, d.h. mit einem bremsenden Drehmoment beaufschlagt, welches die Vorspannung der Feder 41 überwindet. Dadurch wird die Klinke 25 relativ zum Zahnsegment 23 geschwenkt und verriegelt mit diesem. Die Crashsperreneinheit 21 verriegelt also die hintere Schwinge 7 mit dem Gestell 5, und zwar in einer sehr frühen Phase des Crashs. Durch die schnelle Reaktionszeit kann die Vorverlagerung des Gurtanbindungspunktes reduziert werden.

Bei einer Ausbildung des Elementes 51 als Dämpfer kann im Hinblick auf statische Tests mit geringen Prüfgeschwindigkeiten der Gelenkbolzen 11 in Richtung des Gestells 5 federgelagert sein, so daß die hintere Schwinge 7 oberhalb einer Grenzkraft in Richtung des Elementes 51 verschieblich ist und diesen mechanisch sperrt. Die Crashsperreneinheit 21 verriegelt dann wie im Crashfall.

Im zweiten Ausführungsbeipiel ist am Gestell 5 ein linear wirksames Element 62 angebracht, bei welchem es sich entsprechend dem ersten Ausführungsbeispiel um einen Dämpfer, eine schaltbare Kupplung oder einen Aktuator handeln kann. Das Element 62 ist mit einer Haltestange 64 an der Klinke 25 angelenkt. Im Falle eines Dämpfers zu Crashbeginn mit dem Aufbau einer großen Relativgeschwindigkeit der Getriebeglieder oder im Falle einer schaltbaren Kupplung kurz vor Crashbeginn wird - wie im ersten Ausführungsbeispiel - die Klinke 25 festgehalten, so daß eine anschließende Bewegung der hinteren Schwinge 7 zu einem Verriegeln der Crashsperreneinheit 21 führt. Im Falle eines Aktuators verriegelt die Klinke 25 bereits mit der Stellbewegung des Elementes 62.

Im dritten Ausführungsbeispiel ist die Klinke 25' etwas stärker abgewinkelt ausgebildet und auf dem Querrohr 13 gelagert. Ein - wiederum rotatorisch wirksames - Element 73 ist zwischen der Klinke 25' und der Koppel 8 angebracht. Das Aktivieren der Crashsperreneinheit 21 und das Verriegeln der Klinke 25' mit dem gestellfesten Zahnsegment 23 erfolgt wie bei den beiden anderen Ausführungsbeispielen, d.h. im Falle eines Dämpfers wird durch eine große Relativgeschwindigkeit der Getriebeglieder zu Crashbeginn die Klinke 25' koppelfest gehalten und verriegelt gleich darauf. Im Falle einer schaltbaren Kupplung kann die Klinke 25' bereits kurz vor Crashbeginn festgehalten werden, und im Falle eines Aktuators wird die Klinke 25' kurz vor Crashbeginn durch eine Stellbewegung des Elementes 73 in das Zahnsegment 23 bereits eingesteuert.

### Bezugszeichenliste

- 1: Fahrzeugsitz
- 4: Viergelenk
- 5: Gestell
- 6: vordere Schwinge
- 7: hintere Schwinge
- 8: Koppel
- 11: Gelenkbolzen
- 13: Querrohr
- 21: Crashsperreneinheit
- 23: Zahnsegment, Verriegelungsglied
- 25, 25': Klinke, Verriegelungsglied
- 27: Lagerbolzen
- 31: unterer Verzahnungsbereich
- 32: oberer Verzahnungbereich
- 33: Schwerpunkt
- 35: unterer Zahnsegmentbereich
- 36: oberer Zahnsegmentbereich
- 38: Führungsbolzen
- 39: Kulisse
- 41: Feder
- 43: erster Anschlag
- 44: zweiter Anschlag
- 45: Durchbruch
- 51: Element, 1. Ausführungsbeispiel
- 53: Kurbeltrieb
- 62: Element, 2. Ausführungsbeispiel
- 64: Haltestange
- 73: Element, 3. Ausführungsbeispiel

## Patentansprüche

1. Fahrzeugsitz, insbesondere Kraftfahrzeugsitz, mit wenigstens einem durch vier Getriebeglieder (5, 6, 7, 8) definierten Viergelenk (4) zur Einstellung der Sitzhöhe und einer Crashsperreneinheit (21), die im Crashfall wenigstens zwei der Getriebeglieder (5, 6, 7, 8) mittels zweier Verriegelungsglieder (23, 25) miteinander verriegelt, **dadurch gekennzeichnet, daß** die Crashsperreneinheit (21) kombiniert ist aus den zwei Verriegelungsgliedern (23, 25) und einem passiven oder schaltbaren Element (51, 62, 73), mittels welchem die Crashsperreneinheit (21) bereits vor oder zu Beginn des Crashs gesondert aktiviert wird, indem das Element (51, 62, 73) bereits vor oder zu Beginn des Crashs in einen sperrenden Zustand wechselt und **dadurch** eines der Verriegelungsglieder (23, 25) festhält, so daß mit der aktivierten Crashsperreneinheit (21) das Verriegeln der Verriegelungsglieder (23, 25) zwangsgesteuert mit einer beginnenden Bewegung des Viergelenks (4) erfolgt.

2. Fahrzeugsitz nach Anspruch 1, **dadurch gekennzeichnet, daß** die Crashsperreneinheit (21) fremdgesteuert oder in Abhängigkeit der lokalen Randbedingungen aktiviert wird.

3. Fahrzeugsitz nach Anspruch 1 oder 2, **dadurch gekennzeichnet, daß** als Element (51, 62, 73) ein Dämpfer vorgesehen ist, welcher bei hohen Relativgeschwindigkeiten zwischen den Getriebegliedern (5, 6, 7, 8) in einen sperrenden Zustand mit hohem Bremsmoment wechselt.

4. Fahrzeugsitz nach Anspruch 1 oder 2, **dadurch gekennzeichnet, daß** als Element (51, 62, 73) eine schaltbare Kupplung vorgesehen ist.

5. Fahrzeugsitz nach Anspruch 1 oder 2, **dadurch gekennzeichnet, daß** als Element (51, 62, 73) ein Aktuator vorgesehen ist, wobei ein Crashsensor den Aktuator zu einer Stellbewegung veranlaßt, welche die Verriegelungsglieder (23, 25) zum Anschnäbeln bringt.

6. Fahrzeugsitz nach einem der Ansprüche 1 bis 5, **dadurch gekennzeichnet, daß** die Crashsperreneinheit (21) ein fahrzeugstrukturfestes Gestell (5) und eine am Gestell (5) angelenkte Schwinge (7) als zwei der Getriebeglieder (5, 6, 7, 8) miteinander verriegelt.

7. Fahrzeugsitz nach einem der Ansprüche 1 bis 6, **dadurch gekennzeichnet, daß** die Crashsperreneinheit (21) als ein Verriegelungsglied eine in zwei Richtungen wirksame Klinke (25) aufweist, welche an einem der miteinander verriegelnden Getriebeglieder (7) schwenkbar gelagert ist, wobei das andere Verriegelungsglied (23) fest an dem anderen Getriebeglied (5) angebracht ist.

8. Fahrzeugsitz nach Anspruch 7, **dadurch gekennzeichnet, daß** die Klinke (25) mit dem Element (51, 62, 73) mittels eines Hilfsgetriebes gekoppelt ist.

9. Fahrzeugsitz nach Anspruch 7, **dadurch gekennzeichnet, daß** das Element (51, 62, 73) zwischen der Klinke (25') und einem Getriebeglied (8) angebracht ist.

10. Fahrzeugsitz nach einem der Ansprüche 7 bis 9, **dadurch gekennzeichnet, daß** eine Feder (41) im Normalfall die Klinke (25) in einer definierten Lage unter Vorspannung hält.

## Claims

1. Vehicle seat, in particular motor vehicle seat, with at least one four-bar linkage (4), which is defined by four mechanism links (5, 6, 7, 8), for setting the seat height, and a crash blocking unit (21) which, in the event of a crash, locks at least two of the mechanism links (5, 6, 7, 8) together by means of two locking links (23, 25), **characterised in that** the crash blocking unit (21) consists of a combination of two locking links (23, 25) and a passive or switchable element (51, 62, 73), by means of which the crash blocking unit (21) is separately activated even prior to or at the beginning of the crash by the element (51, 62, 73) changing into a blocking state even prior to or at the beginning of the crash and thereby retaining one of the locking links (23, 25), so that, with the crash blocking unit (21) activated, the locking of the locking links (23, 25) takes place in a positively controlled manner as the four-bar linkage (4) begins to move.

2. Vehicle seat according to Claim 1, **characterised in that** the crash blocking unit (21) is externally controlled or activated as a function of the local boundary conditions.

3. Vehicle seat according to Claim 1 or 2, **characterised in that** a damper is provided as the element (51, 62, 73), which damper changes into a blocking state with a high braking torque when there are high relative speeds between the mechanism links (5, 6, 7, 8).

4. Vehicle seat according to Claim 1 or 2, **characterised in that** a switchable coupling is provided as the element (51, 62, 73).

5. Vehicle seat according to Claim 1 or 2, **characterised in that** an actuator is provided as the element (51, 62, 73), wherein a crash sensor causes the actuator to execute a positioning movement which makes the locking links (23, 25) nestle together.

6. Vehicle seat according to any one of Claims 1 to 5, **characterised in that** the crash blocking unit (21) locks together a frame (5) fixed to the vehicle structure and a rocker (7) articulated to the frame as two of the mechanism links (5, 6, 7, 8).

7. Vehicle seat according to any one of Claims 1 to 6, **characterised in that** the crash blocking unit (21) has, as one locking link, a pawl (25) which is effective in two directions and is pivotably mounted on one of the interlocking mechanism links (7), wherein the other locking link (23) is firmly attached to the other mechanism link (5).

8. Vehicle seat according to Claim 7, **characterised in that** the pawl (25) is coupled to the element (51, 62, 73) by means of an auxiliary mechanism.

9. Vehicle seat according to Claim 7, **characterised in that** the element (51, 62, 73) is attached between the pawl (25') and a mechanism link (8).

10. Vehicle seat according to any one of Claims 7 to 9, **characterised in that** a spring (41) normally holds the pawl (25) under prestress in a defined position.

## Revendications

1. - Siège de véhicule, en particulier siège de véhicule automobile, comportant au moins un quadrilatère articulé (4) défini par quatre éléments d'entraînement (5, 6, 7, 8) pour le réglage de la hauteur du siège et une unité (21) de blocage en cas de collision, laquelle, en cas de collision, verrouille ensemble au moins deux des éléments d'entraînement (5, 6, 7, 8) au moyen de deux éléments de verrouillage (23, 25), **caractérisé par le fait que** l'unité (21) de blocage en cas de collision est combinée à partir des deux éléments de verrouillage (23, 25) et d'un élément passif ou commutable (51, 62, 73), au moyen duquel l'unité (21) de blocage en cas de collision est activée séparément déjà avant ou au début de la collision tandis que l'élément (51, 62, 73) passe déjà avant ou au début de la collision dans un état bloquant et par là retient l'un des éléments de verrouillage (23, 25) de telle sorte qu'avec l'unité (21) de blocage en cas de collision activée, le verrouillage des éléments de verrouillage (23, 25) a lieu commandé de façon forcée avec un mouvement commençant du quadrilatère articulé (4).

2. - Siège de véhicule selon la revendication 1, **caractérisé par le fait que** l'unité (21) de blocage en cas de collision est commandée du dehors ou est activée en fonction des conditions limites locales.

3. - Siège de véhicule selon l'une des revendications 1 ou 2, **caractérisé par le fait que**, comme élément (51, 62, 73) est prévu un amortisseur, lequel, en cas de vitesses relatives élevées entre les éléments d'entraînement (5, 6, 7, 8) passe dans un état bloquant avec un moment de freinage élevé.

4. - Siège de véhicule selon l'une des revendications 1 ou 2, **caractérisé par le fait que**, comme élément (51, 62, 73), est prévu un embrayage.

5. - Siège de véhicule selon l'une des revendications 1 ou 2, **caractérisé par le fait que**, comme élément (51, 62, 73), est prévu un actionneur, un détecteur de collision engageant l'actionneur dans un mouvement de réglage, lequel amène les éléments de verrouillage (23, 25) à s'accrocher.

6. - Siège de véhicule selon l'une des revendications 1 à 5, **caractérisé par le fait que** l'unité (21) de blocage en cas de collision verrouille ensemble un bâti (5) solidaire de la structure du véhicule et une bielle oscillante (7) articulée sur le bâti (5) en tant que deux des éléments d'entraînement (5, 6, 7, 8).

7. - Siège de véhicule selon l'une des revendications 1 à 6, **caractérisé par le fait que** l'unité (21) de verrouillage en cas de collision présente, en tant qu'un élément de verrouillage, un cliquet (25) agissant dans deux directions, lequel est monté basculable sur l'un des éléments d'entraînement (7) se verrouillant réciproquement, l'autre élément de verrouillage (23) étant installé solidement sur l'autre élément d'entraînement (5).

8. - Siège de véhicule selon la revendication 7, **caractérisé par le fait que** le cliquet (25) est couplé avec l'élément (51, 62, 73) au moyen d'un entraînement auxiliaire.

9. - Siège de véhicule selon la revendication 7, **caractérisé par le fait que** l'élément (51, 62, 73) est installé entre le cliquet (25') et un élément d'entraînement (8).

10. - Siège de véhicule selon l'une des revendications 7 à 9, **caractérisé par le fait qu'**un ressort (41) maintient dans le cas normal le cliquet (25) dans une position définie sous prétension.
